Europäisches Patentamt

European Patent Office

Office européen des brevets

(11) Numéro de publication: **0 237 388 B1**

## (12) FASCICULE DE BREVET EUROPEEN

(45) Date de publication de fascicule du brevet: **10.06.92**   (51) Int. Cl.⁵: **H01R 9/26**, H02B 1/20

(21) Numéro de dépôt: **87400303.1**

(22) Date de dépôt: **11.02.87**

(54) **Dispositif d'alimentation ou de pontage pour appareils électriques juxtaposés.**

(30) Priorité: **20.02.86 FR 8602304**

(43) Date de publication de la demande:
**16.09.87 Bulletin 87/38**

(45) Mention de la délivrance du brevet:
**10.06.92 Bulletin 92/24**

(84) Etats contractants désignés:
**AT BE CH DE ES FR GB IT LI NL**

(56) Documents cités:
**EP-A- 0 112 232
DE-A- 1 952 088
DE-A- 3 133 454
DE-U- 8 519 738
US-A- 2 231 916**

(73) Titulaire: **HAGER ELECTRO S.A.
Boulevard d'Europe
F-67210 Obernai(FR)**

(72) Inventeur: **Deckert, Denis
11 Boulevard Clémenceau
F-67190 Mutzig(FR)**

(74) Mandataire: **Lemoine, Michel et al
Cabinet Michel Lemoine et Bernasconi 13
Boulevard des Batignolles
F-75008 Paris(FR)**

## Description

L'invention a trait à un dispositif d'alimentation ou de pontage pour appareils électriques modulaires ou non, en particulier pour appareils de protection, de coupure ou de commande, qui sont juxtaposés, notamment, sur un rail de support commun. Ces appareils peuvent être par exemple des coupe-circuit à fusibles uni-polaires ou multi-polaires ; des disjoncteurs magnétothermiques uni-polaires ou multi-polaires ; des interrupteurs différentiels ou à commande mécanique ; des télérupteurs ; des relais ; ou tous appareils analogues. Par "appareils modulaires", on entend des appareils dont l'épaisseur est égale à une valeur fixe ou "module" ou à un multiple de ce module. Il est cependant entendu que le dispositif et les éléments selon l'invention sont également adaptés à l'alimentation ou au pontage d'appareils électriques non modulaires ou d'une combinaison d'appareils électriques modulaires et non modulaires.

L'alimentation ou le pontage de tels appareils se fait habituellement à l'aide de conducteurs séparés, si bien que les bornes d'alimentation des divers appareils reçoivent, pour la plupart d'entre elles, les extrémités de deux tels conducteurs à la fois, ce qui diminue la fiabilité du serrage de ces extrémités dans lesdites bornes. En outre, le montage est complexe et l'encombrement des conducteurs multiples peut poser un problème.

La déposante a déjà proposé, dans le EP-A-0 112 232, un dispositif d'alimentation ou de pontage pour appareils électriques modulaires juxtaposés ainsi que des éléments de ce dispositif, ledit dispositif comportant une ou plusieurs barres omnibus en forme de peigne dont les dents sont ou peuvent être écartées l'une de l'autre d'une distance égale au module ou à un multiple du module des appareils électriques et qui sont agencées de manière à coopérer avec les bornes d'alimentation, telles que les bornes latérales, de ces appareils, le dispositif comportant en outre au moins un bloc d'alimentation agencé de façon à être lui-même juxtaposé aux appareils électriques modulaires et constitué d'un corps isolant portant, d'un côté, une borne d'alimentation et, de l'autre côté, une borne de connexion reliée électriquement à la borne d'alimentation, les dents de la barre omnibus étant conformées de manière telle et situées à une hauteur telle qu'elles s'introduisent dans certaines au moins des bornes d'alimentation des appareils lorsque le tronc commun de la barre omnibus est engagé dans la borne de connexion du bloc d'alimentation correspondant.

Malgré un grand nombre d'avantages qui ont été apportés, une telle disposition présente cependant quelques inconvénients. En particulier, elle n'est utilisable que pour des juxtapositions d'appareils modulaires du fait que les barres omnibus sont nécessairement fabriquées à l'avance. En outre, celles des dents d'une barre qui ne sont pas utilisées pour le pontage doivent être cassées de sorte que le pontage se trouve figé et qu'en cas de modification du pontage, une nouvelle barre omnibus doit être substituée à l'ancienne. Enfin, du fait que les barres omnibus sont disposées parallèlement et que les dents ont une longueur déterminée, chaque barre ne peut être associée qu'à un niveau déterminé de bornes des appareils à moins de réaliser, in situ, un pliage approprié de chaque dent et une section à la longueur permettant la connexion avec la borne correspondante de l'appareil.

On peut également citer le DE-A-1 690 044 qui décrit également des barres conductrices en forme de peigne. Le FR-A-2 437 715 décrit également un ensemble de barres en forme de peigne. Ces différents dispositifs présentent les inconvénients du dispositif faisant l'objet de la demande de brevet précitée de la déposante sans en avoir les avantages.

On connaît également déjà des dispositifs utilisant des barres omnibus rectilignes dépourvues de peigne avec des éléments de raccordement assurant la liaison entre la barre et la borne de l'appareil. De tels dispositifs sont par exemple décrits dans le DE-A-1 268 249, dans le GB-A-1 560 168 et dans le FR-A-1 554 705.

Un tel dispositif est également décrit dans l'article FEINWERKTECHNIK vol. 73 n° 9, 1969, pages 390-391, MUNICH, H. FRANK : "Stand und Entwicklung der elektronischen und elektromechanischen Bauelemente, Teil 1". Ce document montre des appareils reliés à des barres omnibus qui se trouvent pincées entre des saillies de boîtier munies de moyens de serrage. Une telle réalisation est complexe et elle nécessite des formes de boîtier et d'isolant particulières.

Le GB-A-1 168 368 décrit un dispositif dans lequel une même élément de connexion deux fois coudé permet de relier une borne disposée à un seul niveau d'une juxtaposition d'appareils à l'un ou l'autre de deux conducteurs parallèles grâce à des moyens de serrage portés par ledit élément. Une telle disposition est cependant uniquement adaptée à la connexion des câbles de neutre et de terre et ne se prête pas au cas où un boîtier d'appareil est susceptible de présenter des bornes à des niveaux différents.

Le FR-A-1 547 260 décrit un dispositif pour le montage d'interrupteurs électriques tri-polaires destinés à être connectés à trois barres parallèles. Les bornes de l'appareil, disposées en un niveau commun, son reliées aux différentes barres par des paires d'organes d'enfichage en forme de mâchoires disposées dans un bouclier. Une telle réalisation est complexe, de mise en oeuvre délicate et n'est pas appropriée au dispositif de raccordement d'appareils susceptibles de présenter des bornes à des niveaux différents par rapport à un ensemble de barres omnibus parallèles.

Le DE-A-3 133 454 décrit un dispositif dans lequel les bornes d'appareils juxtaposés, situées sur un même niveau, peuvent être reliées à une barre d'un ensemble de quatre barres conductrices parallèles par un jeu de quatre pièces conductrices de formes différentes coopérant avec des pattes de serrage par vis. Un tel dispositif nécessite un stockage d'un grand nombre de pièces différentes conduisant à une maintenance complexe et n'est pas approprié au raccordement d'appareils susceptibles de présenter des bornes à des niveaux différents.

La présente invention se propose de remédier à ces inconvénients et de fournir un dispositif d'alimentation ou de pontage pour appareils électriques juxtaposés, qui soit universel, c'est-à-dire qui permette le montage soit pour des appareils électriques modulaires, soit pour des appareils non modulaires ou toute combinaison des deux.

Un autre objectif de l'invention est de fournir un tel dispositif qui s'affranchisse des limitations dues au niveau des bornes de raccordement des appareils et à leurs pas respectifs, de sorte que chaque conducteur ou barre d'alimentation puisse être relié indifféremment à l'une quelconque des bornes d'un appareil, quel que soit le niveau de ladite borne.

Un autre objectif de l'invention est d'éviter d'avoir à utiliser des barres omnibus de forme spéciale.

Un autre objectif encore de l'invention est de pouvoir réaliser très facilement sur place, et sans modification des autres branchements, toute modification d'un branchement particulier d'un ou plusieurs appareils et notamment inversion de phases, pontages ou autres.

Un autre objectif encore de l'invention est de fournir un dispositif qui soit d'un prix de revient extrêmement faible et dont l'utilisation soit extrêmement simple.

L'invention a pour objet un système de pontage entre des appareils électriques disposés dans des boîtiers modulaires ou non et destinés à être juxtaposés sur un rail de fixation, les boîtiers desdits appareils présentant des bornes de raccordement électrique sur trois niveaux équidistants, et quatre barres omnibus parallèles disposées au regard des boîtiers selon des niveaux équidistants et situées laléralement par rapport aux niveaux des bornes de raccordement, le système comprenant des moyens de raccordement électrique pour assurer la liaison entre barres omnibus et bornes de raccordement, ces moyens de raccordement comprenant différents types de pièces de liaison conductrices sous forme de barres plates présentant chacune trois parties, à savoir une première partie rectiligne destinée à pénétrer dans une borne de raccordement de boîtier, une deuxième partie parallèle à la première destinée à venir se connecter à une barre omnibus, et une partie centrale coudée rattrapant la différence de niveau entre lesdites première et deuxième parties, ladite deuxième partie coopérant avec des moyens de fixation sur la barre omnibus, les différents types de pièces se distinguant par ladite partie centrale, à savoir, pour l'une, une partie centrale courte de préférence perpendiculaire aux première et deuxième parties et permettant de relier la borne du niveau central à l'une ou, par simple renversement, à l'autre des barres omnibus centrales, pour une seconde, une partie centrale de préférence perpendiculaire auxdites première et deuxième parties mais ayant une longueur supérieure pour autoriser une liaison entre la borne de niveau central et les barres omnibus extrêmes, et pour une troisième, une partie centrale de préférence oblique par rapport aux première et deuxième parties et permettant la liaison entre une borne de niveau extrême et une barre omnibus de niveau extrême, l'ensemble des barres omnibus étant de préférence décalé par rapport au plan de symétrie des niveaux de bornes, d'une distance égale à l'épaisseur desdites pièces de façon que chacune des deuxièmes parties desdites pièces viennent se disposer toujours au voisinage de la même face, par exemple la face inférieure, de la barre omnibus correspondante.

De façon avantageuse, la liaison entre les deuxièmes parties desdites pièces et les barres omnibus peut être effectuée par un cavalier enveloppant l'extrémité de la deuxième partie de la pièce ainsi que la barre correspondante et muni de moyens, tels que, de préférence, une vis, permettant de serrer les branches du cavalier sur l'ensemble de la barre omnibus de la deuxième partie de la pièce.

De façon avantageuse, les vis de serrage peuvent comporter des moyens de marquage permettant de les distinguer les unes des autres, par exemple par leurs différentes couleurs, en fonction de leurs niveaux de pontage respectifs. Ces moyens peuvent, par exemple, consister en un prolongement tubulaire isolant coloré, solidaire de la tête de vis qu'il entoure et s'étendant de préférence au-delà de l'ensemble de conducteurs à ponter. Ce prolongement isolant peut aussi servir de guide à un tournevis ou autre outil qu'il isole des autres conducteurs.

De préférence, les deuxièmes parties des pièces présentent une forme de fourche dont l'espace vide, situé entre les branches, permet le passage de la vis de serrage du cavalier ainsi qu'un bossage de centrage du cavalier par rapport à ladite fourche.

Dans une forme de réalisation préférée, les niveaux géométriques des bornes de raccordement sont espacés d'une distance de 8,4 mm alors que les niveaux des barres omnibus sont espacés d'une distance de 10 mm.

D'autres avantages et caractéristiques de l'invention apparaîtront à la lecture de la description suivante, faite à titre d'exemple non limitatif et se référant au dessin annexé dans lequel :

la figure 1 représente une vue en coupe verticale d'un dispositif selon l'invention avec deux types de pièces de raccordement montées dans les deux positions,

la figure 2 représente une vue en coupe verticale du dispositif selon l'invention avec un autre type de pièce de raccordement, qui peut également se monter selon deux types de montage différents,

la figure 3 représente une vue de dessus d'une pièce de raccordement de ce dispositif,

la figure 4 représente une coupe en élévation d'un cavalier ouvert,

la figure 5 réprésente une vue de dessus de ce cavalier,

la figure 6 représente une vue en coupe A-A de ce cavalier.

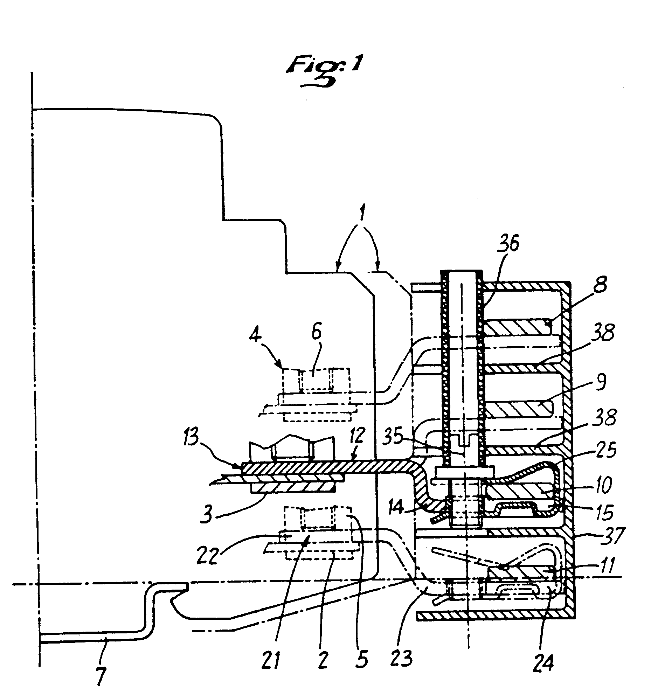

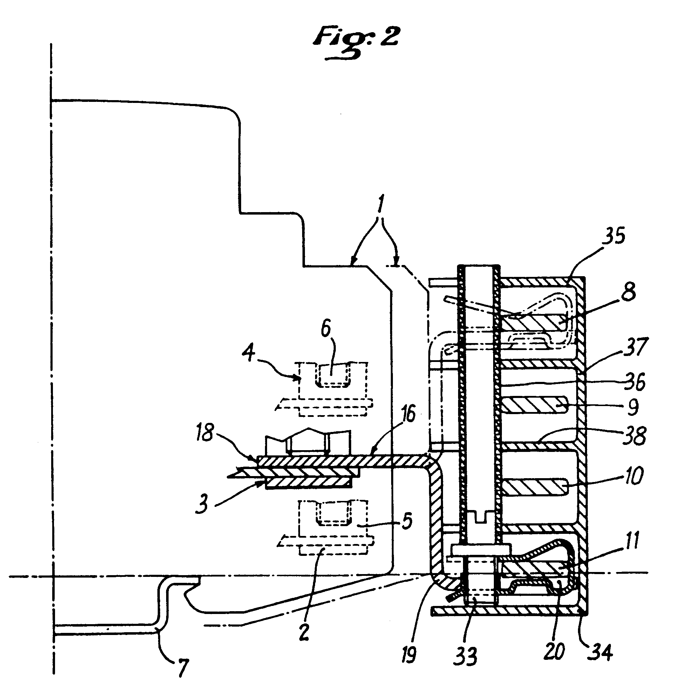

On a représenté, sur les figures 1 et 2, une vue schématique d'un boîtier 1 d'un appareil dont on a représenté, de façon schématique, les trois bornes, à savoir une borne inférieure 2, une borne centrale 3, une borne supérieure 4, lesdites bornes comprenant, d'une façon connue, un élément tubulaire 5, par exemple de section rectangulaire, à l'intérieur duquel peuvent pénétrer, d'une part, les premières parties des pièces selon l'invention, d'autre part, d'autres conducteurs, des vis captives 6 permettant le serrage des parties contenues dans l'élément tubulaire. Ces bornes peuvent êtres disposées à différents pas ou entraxes.

Le boîtier 1, monté d'une façon classique sur un rail 7 se trouve, du fait de son montage, positionné par rapport à quatre barres omnibus 8, 9, 10 et 11, espacées au pas de 10 mm et courant tout le long de l'ensemble qui peut être constitué par la juxtaposition d'un grand nombre d'appareils avec des boîtiers similaires au boîtier 1 (mais pouvant avoir des épaisseurs quelconques). Les barres 8, 9, 10 et 11 possèdent, comme on le voit, une section rectangulaire dont les arêtes sont légèrement arrondies.

Le raccordement entre les bornes et les barres s'effectue au moyen des pièces selon l'invention.

La première pièce 12 présente une première partie rectiligne 13 susceptible de pénétrer dans la borne 3. Cette première partie 13 se poursuit, après un coude, par une partie centrale 14 perpendiculaire à la partie 13, laquelle se poursuit à son tour, après un nouveau coude, par la deuxième partie 15 qui s'étend parallèlement à la première partie 13 mais en étant décalée d'un niveau déterminé par la longueur de la partie centrale 14. Comme on le voit, la longueur de la partie centrale 14 est telle que, lorsque la première partie 13 est appliquée, dans la borne 3, contre la paroi inférieure interne de la borne, la partie 15 peut, suivant l'orientation vers le haut ou vers le bas de la pièce, venir se disposer sous la face inférieure de la barre 10 ou sous la face inférieure de la barre 9 comme le montrent les deux positions possibles de la pièce 12.

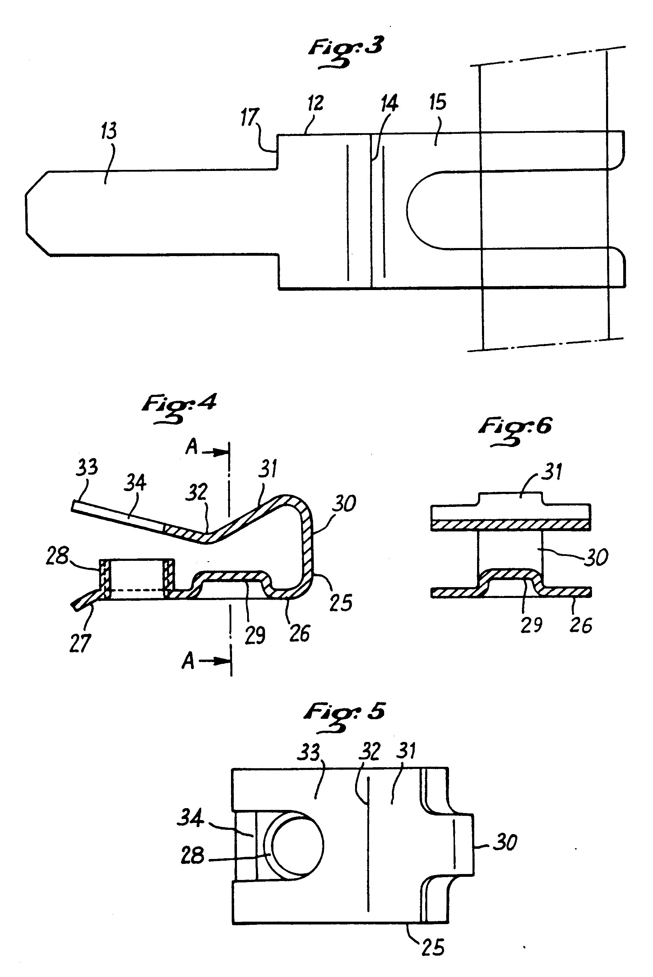

En se référant à la figure 3, on voit que la partie 13, de préférence chanfreinée à son extrémité libre, présente un épaulement 17 provoquant son élargissement, cet épaulement permettant de limiter l'enfoncement de la partie 13 dans la borne. La zone élargie de la partie 13 se poursuit par la partie centrale 14, après quoi la seconde partie 15 se poursuit en ayant la forme d'une fourche.

On se réfère à la figure 2.

La deuxième pièce de raccordement 16 est destinée à relier la borne 3 à l'une des barres extrêmes 11 et 8. Elle comporte une première extrémité 18 identique à l'extrémité 13 et pénétrant dans la borne 3. Ell se poursuit, après un coude identique au premier coude qui suit l'extrémité 13 de la pièce 12, par une partie centrale 19 de grande longueur et qui s'étend de façon sensiblement perpendiculaire au plan de la première extrémité. Après un nouveau coude, cette partie centrale 19 se poursuit par une deuxième partie 20 en tous points identique à la partie 15 de la pièce 12. Suivant l'une de ses deux positions, la pièce 16 peut relier la face inférieure de la barre 11 à la borne centrale 3 ou la face inférieure de la barre 8 à ladite borne 3.

On se réfère à nouveau à la figure 1.

La troisième pièce, désignée par 21, présente une première partie 22 similaire à la partie 13, avec un épaulement identique à l'épaulement 17, mais cette partie 22 est plus courte que la partie 13 et se poursuit, après un premier coude, par une partie centrale oblique 23, laquelle, après un nouveau coude, se poursuit par la deuxième partie 24, cette fois-ci identique aux parties 15 et 20. Grâce à la position oblique de la partie 23 et à la moindre longueur de la partie 22, on voit que l'on laisse subsister un espace maximum entre les pièces 12 et 21. Les pièces 21 peuvent relier la borne inférieure 2 à la face inférieure de la barre inférieure 11 ou la borne supérieure 4 à la face inférieure de la barre supérieure 8.

Les différentes pièces 12, 16, 21 ont, de préférence, une épaisseur égale à 15 mm et une longueur hors tout, entre les extrémités libres des première et deuxième parties, de 35 mm. La différence de niveau entre les première et deuxième parties des différentes pièces, par exemple la différence entre la face inférieure de la première partie d'une pièce et la face supérieure de la deuxième partie de la même pièce, est la suivante :

pour la pièce 12 : 6,5 mm
pour la pièce 16 : 16,5 mm
pour la pièce 21 : 8,1 mm.

L'opérateur, lorsqu'il désire effectuer un raccordement, introduit d'abord une pièce 12, 16 ou 21 dans la borne convenable du boîtier. Il y serre la pièce qui se trouve ainsi immobilisée avec sa deuxième extrémité située contre la face inférieure de la barre omnibus choisie ou à proximité de celle-ci. Il peut alors venir insérer sans difficulté un cavalier de blocage 25 qui présente deux branches, à savoir une branche inférieure 26 munie d'une extrémité oblique formant chanfrein 27, une douille solidaire taraudée 28 s'étendant vers le haut et un bossage rectangulaire 29, dont les dimensions transversales, de peu inférieures à la largeur de l'ouverture de la fourche de la pièce de liaison, permettent le maintien du cavalier 25 dans l'alignement de la pièce. La base 30 du cavalier se poursuit par la deuxième branche 31 qui forme un coude 32 orienté vers la branche 26, l'extrémité 33 de la branche 30 s'étendant, normalement de façon divergente en présentant une échancrure médiane 34 permettant le passage d'une vis spéciale 35. Le cas échéant, des moyens (non représentés) peuvent être prévus pour que la vis 35 reste reliée, quelle que soit sa position, à la branche 31. La mise en place du cavalier s'effectue de la droite vers la gauche sur la figure 1 jusqu'à ce que le cavalier serre l'une contre l'autre la deuxième partie de l'élément de liaison 12, 16 ou 21 et la partie sus-jacente de la barre omnibus correspondante, le cavalier étant, de préférence, agencé pour que dans cette position le coude 32 s'applique déjà élastiquement contre la face supérieure de la barre omnibus. Le vissage de la vis 35 dans le taraudage de la douille 28 ramène définitivement l'extrémité 33 du cavalier dans la position horizontale comme représenté sur la figure 1 et, dans cette position, le cavalier applique fermement l'extrémité de l'élément de raccordement contre la barre omnibus, remplaçant ainsi une rondelle élastique.

Le dévissage de la vis 35 permet, si on le désire, d'éloigner le cavalier et de libérer la barre et la pièce de raccordement.

De façon avantageuse, la vis 35 peut être solidaire d'un tube 36 de matière plastique isolante qui entoure la tête de vis. Le dispositif utilise des ensembles vis 35-tube 36 de quatre couleurs différentes, associées respectivement aux quatre barres conductrices 8, 9 10, 11. On pourrait, en variante, ou en combinaison en utilisant des tubes 36 ayant tous la même longueur, repérer les barres conductrices par le niveau des sommets des tubes 36. Ces tubes 36 peuvent en outre guider un tournevis venant chercher la tête de vis, afin d'éviter des risques de court-circuit.

Une fois toutes les pièces de raccordement posées selon le schéma de branchement désiré et tous les cavaliers mis en place, l'ensemble selon l'invention peut encore recevoir un profil 37 en matière isolante, présentant des ailes latérales 38 assurant un entretoisement qui empêche tout risque de court-circuit. De préférence, les sommets des tubes 36 émergent de façon visible hors du profil 37.

L'invention permet ainsi de réaliser des ensembles munis de barres d'alimentation lisses qui ne se trouvent nullement liées au pas, qui peut d'ailleurs être variable, des différents appareils ou modules juxtaposés sur le rail. En outre, elle ne nécessite la disposition que d'un nombre très limité de pièces, à savoir en général trois pièces de raccordement et un cavalier. Le montage et le démontage sont extrêmement faciles sans qu'il soit nécessaire d'enlever des pièces autres que celles qui doivent être montées ou démontées et, en particulier, on peut rapidement inverser les phases.

D'autre part, le système de pincement des pièces de connexion sur les barres par les cavaliers garantit un serrage "élastique" permanent de bonne qualité dans le temps et ceci par un couple de serrage minimal exercé sur la vis 35.

**Revendications**

1. Système de pontage entre des appareils électriques disposés dans des boîtiers modulaires ou non et destinés à être juxtaposés sur un rail de fixation, les boîtiers desdits appareils présentant des bornes de raccordement électrique (2, 3, 4) sur trois niveaux équidistants, et quatre barres omnibus (8, 9, 10, 11) parallèles disposées au regard des boîtiers selon des niveaux équidistants et situées latéralement par rapport aux niveaux des bornes de raccordement, le système comprenant des moyens de raccordement électrique pour assurer la liaison entre barres omnibus et bornes de raccordement, ces moyens de raccordement comprenant différents types de pièces de liaison conductrices (12, 16, 21) sous forme de barres plates présentant chacune trois parties, à savoir une première partie rectiligne (13, 18, 22) destinée à pénétrer dans une borne de raccordement de boîtier, une deuxième partie (15, 20, 24) parallèle à la première et destinée à venir se connecter à une barre omnibus et une partie centrale coudée (14, 19, 23) rattrapant la différence de niveau entre lesdites première et deuxième parties, ladite deuxième partie (15, 20, 24) coopérant avec des moyens de fixation (25) sur la barre omnibus, les différents types de pièces (12, 16, 21) se distinguant par ladite partie centrale, à savoir, pour l'une (12),une partie centrale courte (14) de préférence perpendiculaire aux première et deuxième parties (13, 15) et permettant de relier la borne du niveau central (3) à l'une ou, par simple renversement, à l'autre des barres omnibus centrales (9, 10), pour une seconde (16), une partie centrale (19) de préférence perpendiculaire auxdites première et deuxième parties (18, 20) mais ayant une longueur supérieure pour autoriser une liaison entre la borne de niveau central (3) et les barres omnibus extrêmes (8, 11), et, pour une troisième (21), une partie centrale (23) de préférence oblique par rapport aux première et deuxième parties (22, 24) et permettant la liaison entre une borne de niveau extrême (2, 4) et une barre omnibus de niveau extrême (8, 11).

2. Système selon la revendication 1, caractérisé en ce que l'ensemble des barres omnibus est décalé, par rapport au plan de symétrie des niveaux de bornes, d'une distance égale à l'épaisseur desdites pièces de liaison (12, 16, 21) de façon que chacune des deuxièmes parties desdites pièces de liaison vienne se disposer toujours au voisinage de la même face de la barre omnibus correspondante.

3. Système selon l'une quelconque des revendications 1 et 2, caractérisé en ce que les moyens de fixation (25) sur la barre omnibus incorporent des vis (35) munies de moyens de marquage, notamment des tubes isolants colorés (36), permettant de distinguer les différents niveaux de pontage.

4. Système selon la revendication 3, caractérisé en ce que les tubes isolants (36) possèdent la même longueur, quel que soit le niveau du pontage correspondant, pour distinguer le niveau de pontage par la position de l'extrémité du tube isolant (36).

5. Système selon l'une quelconque des revendications 1 à 4, caractérisé en ce que la première partie (13, 18, 22) des pièces de liaison (12, 16, 21) présente un épaulement d'élargissement (17) limitant l'introduction de ladite première partie dans la borne de raccordement.

6. Système selon l'une quelconque des revendications 1 à 5, caractérisé en ce que ladite deuxième partie (15, 20, 24) des pièces de liaison (12, 16, 21) présente une forme de fourche.

7. Système selon l'une quelconque des revendications 1 à 6, caractérisé en ce que le moyen de fixation (25) entre les deuxièmes parties (15, 20, 24) desdites pièces de liaison (12, 16, 21) et les barres omnibus (8, 9, 10, 11) est un cavalier (25) enveloppant l'extrémité de la deuxième partie de la pièce de liaison ainsi que la barre omnibus correspondante et muni de moyens permettant de serrer les branches du cavalier sur l'ensemble de la barre omnibus et de la deuxième partie de la pièce de liaison.

8. Système selon la revendication 7, caractérisé en ce que le cavalier (25) comporte, à partir d'une base (30), deux branches (26, 31) susceptibles de se rapprocher sous l'action d'un moyen de fixation tel que la vis (35) pour venir serrer une barre omnibus contre une deuxième partie de la pièce de liaison.

9. Système selon l'ensemble des revendications 6 et 8, caractérisé en ce que l'une (26) des branches du cavalier (25) possède un relief (29) de positionnement dans l'espace vide de la fourche d'une deuxième partie de la pièce de liaison.

10. Système selon l'une des revendications 8 et 9, caractérisé en ce que l'une (26) des branches du cavalier (25) présente une douille taraudée (28) pour recevoir la vis (35).

11. Système selon l'une quelconque des revendications 8 à 10, caractérisé en ce que l'une (31) des branches du cavalier (25) présente une forme de fourche (34) pour le passage de la vis (35).

12. Système selon l'une quelconque des revendications 8 à 11, caractérisé en ce que l'une (31) des branches du cavalier (25) présente un coude interne (32).

## Claims

1. A system of coupling between electrical appliances disposed in casings, modular or otherwise, and intended to be juxtaposed on a fixing rail, the casings of the said appliances having electrical connection terminals (2, 3, 4) on three equidistant levels, and four parallel bus bars (8, 9, 10, 11) disposed opposite the casings according to equidistant levels which are situated laterally in relation to the levels of the connecting terminals, the system comprising electrical connection means to ensure a connection between bus bars and connecting terminals, the said connecting means comprising different types of conductive connecting members (12, 16, 21) in the form of flat bars each having three parts, viz. a first rectilinear part (13, 18, 22) intended to penetrate a casing connecting terminal, a second part (15, 20, 24) parallel with the first and intended to come into contact with a bus bar and an angled central part (14, 19, 23) which makes up the difference in level between the said first and second parts, the said second part (15, 20, 24) co-operating with means (25) for mounting on the bus bar, the different types of members (12, 16, 21) being distinguished by the said central part, viz. in one case (12) a short central part (14) preferably at right-angles to the first and second parts (13, 15) are making it possible to connect the terminal on the central level (3) to one or, by simple reversal, to the other of the central bus bars (9, 10), for a second (16) essential part (19) which is preferably perpendicular to the said first and second part (18, 20) but having a greater length to allow a connection between the terminal on central level (3) and the end bus bars (8, 11) and, for a third (21), a central part (23) which is preferably oblique in relation to the first and second parts (22, 24) and allowing a connection between an end level terminal (2, 4) and an end level bus bar (8, 11).

2. A system according to claim 1, characterised in that the assembly of bus bars is offset in relation to the plane of symmetry of the levels of terminals by a distance equal to the thickness of the said connecting members (12, 16, 21) so that each of the two parts of the said connecting members is always disposed in the vicinity of the same face of the corresponding bus bar.

3. A system according to either of claims 1 and 2, characterised in that the means (25) of fixing on the bus bar incorporate screws (35) provided with marking means, particularly coloured insulating tubes (36) which make it possible to distinguish the various levels of coupling.

4. A system according to claim 3, characterised in that the insulating tubes (36) are of the same length whatever may be the corresponding coupling level, in order to distinguish the coupling level by the position of the end of the insulating tube (36).

5. A system according to any one of claims 1 to 4, characterised in that the first part (13, 18, 22) of the connecting members (12, 16, 21) has a widening shoulder (17) limiting the insertion of the said first part into the connecting terminal.

6. A system according to any one of claims 1 to 5, characterised in that the said second part (15, 20, 24) of the connecting members (12, 16, 21) is fork-shaped.

7. A system according to any one of claims 1 to 6, characterised in that the fixing means (25) between the second parts (15, 20, 24) of the said connecting members (12, 16, 21) and the bus bars (8, 9, 10, 11) is a jumper link (25) enclosing the end of the second part of the connecting member and also the corresponding bus bar and provided with means which make it possible to clamp the arms of the jumper link onto the assembly of the bus bar and the second part of the connecting member.

8. A system according to claim 7, characterised in that the jumper link (25) comprises, with effect from a base (30), two arms (26, 31) which are capable of moving towards each other under the action of a fixing means such as the screw (35) so that a bus bar is clamped against a second part of the connecting member.

9. A system according to claims 6 and 8, characterised in that one (26) of the arms of the jumper link (25) has a positioning relief (29) to fit into the empty space in the fork in a second part of the connecting member.

10. A system according to one of claims 8 or 9, characterised in that one (26) of the arms of the jumper link (25) has a screwthreaded socket (28) adapted to receive the screw (35).

11. A system according to any one of claims 8 to 10, characterised in that one (31) of the arms of the jumper link (25) is in the shape of a fork (34) to allow passage of the screw (35).

12. A system according to any one of claims 8 to 11, characterised in that one (31) of the arms of the jumper link (25) has an inner bend (32).

**Patentansprüche**

1. System zur Überbrückung zwischen elektrischen Apparaten, die in modulartigen oder nichtmodulartigen Gehäusen untergebracht und dazu bestimmt sind, auf einer Befestigungsschiene nebeneinander angeordnet zu werden, wobei die Gehäuse dieser Apparate elektrische Anschlußklemmen (2, 3, 4) auf drei in gleichen Abständen auftretenden Ebenen sowie vier parallele Sammelschienen (8, 9, 10, 11) aufweisen, die in bezug auf die Gehäuse in in gleichmäßigen Abständen angeordneten und gegenüber den Ebenen der Anschlußklemmen seitlich versetzten Ebenen angeordnet sind, wobei das System elektrische Verbindungsmittel zur Sicherstellung der Verbindung zwischen Sammelschienen und Anschlußklemmen aufweist, wobei die Verbindungsmittel verschiedene Arten von leitenden Verbindungsstücken (12, 16, 21) in Gestalt von flachen Schienen aufweisen, die jeweils drei Partien besitzen, nämlich eine erste, geradlinige Partie (13, 18, 22) dazu bestimmt, in eine Verbindungsklemme des Gehäuses einzugreifen, eine zweite, zu der ersten parallele Partie (15, 20, 24) dazu bestimmt, mit einer Sammelschiene verbunden zu werden, und eine mittlere, abgekröpfte Partie (14, 19, 23), welche den Niveauunterschied zwischen der erwähnten ersten und zweiten Partie ausgleicht, und wobei die zweite Partie (15, 20, 24) mit Befestigungsmitteln (25) auf der Sammelschiene zusammenwirkt und die verschiedenen Arten der Stücke (12, 16, 21) sich durch die erwähnte mittlere Partie unterscheiden, nämlich für eines (12) eine kurze mittlere Partie (14), die vorzugsweise senkrecht zu der ersten und zweiten Partie (13, 15) verläuft und es erlaubt, die Klemme der mittleren Ebene (3) mit der einen oder, durch einfache Umkehrung, mit der anderen der mittleren Sammelschienen (9, 10) zu verbinden, für ein zweites (16) eine mittlere Partie (19), die vorzugsweise senkrecht zu der ersten und zweiten Partie (18, 20) verläuft, jedoch eine größere Länge besitzt, um eine Verbindung zwischen der Klemme der mittleren Ebene (3) und den äußeren Sammelschienen (8, 11) zu ermöglichen, und für ein drittes (21) eine mittlere Partie (23), die vorzugsweise schräg zu der ersten und zweiten Partie (22, 24) verläuft und die Verbindung zwischen einer äußeren Klemme (2, 4) und einer äußeren Sammelschiene (8, 11) gestattet.

2. System nach Anspruch 1, dadurch gekennzeichnet, daß die Gesamtheit der Sammelschienen gegenüber der Symmetrieebene der Ebenen der Klemmen um eine Strecke entsprechend der Dicke der genannten Verbindungsstücke (12, 16, 21) versetzt ist derart, daß jede der zweiten Partien der genannten Verbindungsstücke sich stets in der Nähe der gleichen Seite der betreffenden Sammelschiene befinden kann.

3. System nach einem der Ansprüche 1 und 2, dadurch gekennzeichnet, daß die Befestigungsmittel (25) auf der Sammelschiene Schrauben (35) mit Anzeigemitteln, insbesondere farbigen Isolierrohren (36), aufweisen, die es erlauben, die verschiedenen Verbindungsebenen zu unterscheiden.

4. System nach Anspruch 3, dadurch gekennzeichnet, daß die Isolierrohre (36) unabhängig von der Ebene der Überbrückung die gleiche Länge besitzen, um die Verbindungsebene durch die Position des Endes des Isolierrohrs (36) erkennen zu können.

5. System nach einem der Ansprüche 1 bis 4, dadurch gekennzeichnet, daß die erste Partie (13, 18, 22) der Verbindungsstücke (12, 16, 21) eine hervortretende Schulter (17) aufweist, welche die Einführung dieser ersten Partie in die Anschlußklemme begrenzt.

6. System nach einem der Ansprüche 1 bis 5, dadurch gekennzeichnet, daß die genannte zweite Partie (15, 20, 24) der Verbindungsstücke (12, 16, 21) gabelförmig ist.

7. System nach einem der Ansprüche 1 bis 6, dadurch gekennzeichnet, daß die Befestigungsmittel (25) zur Anbringung der zweiten Partien (15, 20, 24) der Verbindungsstücke (12, 16, 21) an den Sammelschienen (8, 9, 10, 11) aus einem Reiter (25) bestehen, der das Ende der zweiten Partie des Verbindungsstücks wie auch die entsprechende Sammelschiene einschließt und Mittel aufweist, die ein Zusammenspannen der Schenkel des Reiters auf der Kombination Sammelschiene und zweite Partie des Verbundungsstücks ermöglichen.

8. System nach Anspruch 7, dadurch gekennzeichnet, daß der Reiter (25), von einer Basis (30) ausgehend, zwei Schenkel (26, 31) aufweist, die in der Lage sind, unter Betätigung eines Befestigungsmittels, wie etwa der Schraube (35), einander zu nähern, um eine Sammelschiene mit der zweiten Partie des Verbindungsstücks zusammenzuspannen.

9. System nach einer Kombination der Ansprüche 6 und 8, dadurch gekennzeichnet, daß der eine (26) der Schenkel des Reiters (25) einen Vorsprung (29) zur Positionierung in der Aussparung der Gabelung einer zweiten Partie des Verbindungsstücks aufweist.

10. System nach einem der Ansprüche 8 und 9, dadurch gekennzeichnet, daß einer (26) der Schenkel des Reiters (25) einen Gewinderohransatz (28) zur Aufnahme der Schraube (35) aufweist.

11. System nach einem der Ansprüche 8 bis 10, dadurch gekennzeichnet, daß einer (31) der Schenkel des Reiters (25) eine Gabelung (34) zur Aufnahme der Schraube (35) aufweist.

12. System nach einem der Anprüche 8 bis 11, dadurch gekennzeichnet, daß einer (31) der Schenkel des Reiters (25) ein nach innen gerichtetes Knie (32) aufweist.

Fig:1

Fig. 2

*Fig:3*

*Fig:4*

*Fig:6*

*Fig:5*